# EUROPÄISCHE PATENTSCHRIFT

(11) **EP 1 892 077 B1**
(45) Veröffentlichungstag und Bekanntmachung des Hinweises auf die Patenterteilung: **07.11.2018**
(21) Anmeldenummer: 07114783.9
(22) Anmeldetag: 22.08.2007
(51) Int. Cl.: B29C 70/12, B29C 70/16, B29C 70/46, B29C 33/30, B29C 43/36

(54) **Verfahren und Vorrichtung zur Herstellung eines Faserverbundwerkstoll-Bauteils**
Method and device for producing fibrous composite component
Procédé et dispositif de fabrication d'un composant de matériau composite renforcé par des fibres

(30) Priorität: 24.08.2006 DE 102006041654
(43) Veröffentlichungstag der Anmeldung: 27.02.2008
(73) Patentinhaber: Deutsches Zentrum für Luft- und Raumfahrt e.V., 51147 Köln (DE)
(72) Erfinder: Keck, Rüdiger, 74081 Heilbronn (DE)
(74) Vertreter: Hoeger, Stellrecht & Partner Patentanwälte mbB

(56) Entgegenhaltungen:
- WO-A-02/16197
- WO-A-97/30651
- JP-A- 2 162 020
- JP-A- 2 162 021
- JP-A- 5 009 301
- US-A- 6 146 122
- US-A1- 2005 153 120

## Beschreibung

Die Erfindung betrifft ein Verfahren zur Herstellung eines Faserverbundwerkstoff-Bauteils, welches einen faserverstärkten Grundkörper und einen an dem Grundkörper angeordneten kurzfaserverstärkten Flanschbereich aufweist.

Die Erfindung betrifft ferner eine Vorrichtung zur Herstellung eines Faserverbundwerkstoff-Bauteils, welches einen faserverstärkten Grundkörper mit thermoplastischem Matrixmaterial und einen an dem Grundkörper angeordneten kurzfaserverstärkten Flanschbereich mit thermoplastischem Matrixmaterial aufweist, umfassend eine Heizpresse mit mindestens einem Druckstempel, wobei der mindestens eine Druckstempel so ausgebildet ist, dass unter Umformung und Verpressung eines oder mehrerer Flanschkörper-Rohlinge der Flanschbereich in seiner Endkontur oder endkonturnah herstellbar ist.

In der nicht vorveröffentlichten DE 10 2005 034 621 B3 ist eine Verbundstruktur beschrieben, welche ein erstes Bauteil aus einem Faserverbundwerkstoff mit thermoplastischer Matrix und mindestens ein weiteres zweites Bauteil aus einem Faserverbundwerkstoff mit thermoplastischer Matrix umfasst. Das zweite Bauteil ist mit dem ersten Bauteil verbunden, wobei das zweite Bauteil einen Tragebereich aus mit Endlosfasern verstärktem Werkstoff und einen Flanschbereich aus kurfaserverstärktem Werkstoff umfasst und über den Flanschbereich mit dem ersten Bauteil verbunden ist.

Durch den Tragebereich mit Endlosfaserverstärkung lässt sich eine stabile Struktur bereitstellen, in welche sich Kräfte einleiten lassen, wobei der Tragebereich bei Kräfteeinleitung parallel zur Faserrichtung hohe Kräfte aufnehmen kann. Die Verbindung mit dem ersten Bauteil erfolgt über den Flanschbereich. Das Material des kurzfaserverstärkten Werkstoffs des Flanschbereichs kann unter Erwärmung lokal zum Fließen gebracht werden. Weiterhin lässt sich eine Kontaktflächenaufschmelzung für das erste Bauteil und das zweite Bauteil erreichen, um die Verbindung herzustellen. Dadurch lässt sich eine Schweißverbindung zwischen dem zweiten Bauteil und dem ersten Bauteil erreichen, welche porenfrei und dicht ist. Es lässt sich eine flächige Verbindung über einen großen Bereich auf einfache Weise herstellen.

Aus der EP 1 508 429 A1 ist ein Strukturbauteil aus einem Kunststoff mit einem Verbindungselement aus einem faserverstärkten Kunststoff zum Verbinden des Strukturbauteils mit wenigstens einem zweiten Bauteil bekannt. Das Verbindungselement enthält ein vom Strukturbauteil abragendes stiftförmiges Element sowie Verankerungsmittel. Die Verankerungsmittel schließen an das stiftförmige Element an und sind integral im Strukturbauteil eingebunden; das stiftförmige Element dient der Erstellung einer formschlüssigen und/oder kraftschlüssigen, nietartigen Verbindung des Strukturbauteils und wenigstens dem zweiten Bauteil.

Aus der WO 97/30651 A2 ist ein Verfahren zur Herstellung eines Kompositteils bekannt, bei dem ein Kern aus einer Harzmatrix verstärkt mit Fasern geformt wird. Der Kern wird mit Fasermaterial bedeckt. Dieses Gebilde wird in einer Form eingeschlossen, welche dem zu formenden Bauteil entspricht. Polymeres Harz wird unter Druck in die Form injiziert, um Harz durch das Fasermaterial zu pressen.

Aus der spät veröffentlichten (Artikel 54(3) EPÜ) europäischen Patentanmeldung 1 745 914 ist ein Verfahren zur Herstellung eines Faserverbundwerkstoff-Bauteils bekannt. Dieses Verfahren umfasst - die Herstellung oder Bereitstellung eines Grundkörper-Rohlings, welcher ein oder mehrere Fasergebilde und thermoplastisches Matrixmaterial aufweist; - die Herstellung oder Bereitstellung eines oder mehrerer Flanschbereich-Rohlinge, welche Kurzfasern und ein thermoplastisches Matrixmaterial aufweisen; und - das Aufspritzen des oder der Flanschbereich-Rohlinge zur Herstellung des Flanschbereichs an dem Grundkörper, wobei der Flanschbereich einen Materialbereich aufweist, welcher eine Stirnseite des Grundkörpers abdeckt.

Die Druckschrift WO 97/30651 offenbart ein Verfahren zur Herstellung eines Faserverbundwerkstoff-Bauteils, welches einen faserverstärkten Grundkörper und einen an dem Grundkörper angeordneten faserverstärkten Flanschbereich aufweist, umfassend:
- die Herstellung oder Bereitstellung eines Grundkörper-Rohlings, welcher ein oder mehrere Fasergebilde und thermoplastisches Matrixmaterial aufweist; - die Herstellung oder Bereitstellung eines oder mehrerer Flanschbereich-Rohlinge, welche Fasern und ein thermoplastisches Matrixmaterial aufweisen; und - das Umformen des oder der Flanschbereich-Rohlinge unter Wärmezufuhr zur Herstellung des Flanschbereichs an dem Grundkörper.

Die Druckschrift US 6 146 122 offenbart eine Vorrichtung zur Herstellung eines Faserverbundwerkstoff-Bauteils, welches einen faserverstärkten Grundkörper mit thermoplastischem Matrixmaterial, umfassend: eine Heizpresse mit mindestens einem Druckstempel, wobei mindestens einen Niederhalter, welcher an dem mindestens einen Druckstempel fixiert ist, und über welchen ein Grundkörper-Rohling in Position haltbar ist, wobei der mindestens eine Niederhalter elastisch über eine oder mehrere Federn an dem mindestens einen Druckstempel fixiert ist und über welchen ein Grundkörper-Rohling in Position haltbar ist, wobei der mindestens eine Niederhalter elastisch über eine oder mehrere Federn an dem mindestens einen Druckstempel fixiert ist.

Der Erfindung liegt die Aufgabe zugrunde, ein Verfahren der eingangs genannten Art bereitzustellen, mit dem sich ein entsprechendes Faserverbundwerkstoff-Bauteil insbesondere zur Verwendung in einer Verbundstruktur auf einfache Weise herstellen lässt.

Diese Aufgabe wird erfindungsgemäß dadurch gelöst, dass das eingangs genannte Verfahren die Schritte umfasst, dass ein Grundkörper-Rohling, welcher ein oder mehrere Fasergebilde und thermoplastisches Matrixmaterial aufweist, hergestellt oder bereitgestellt wird, dass ein oder mehrere Flanschbereich-Rohlinge, welche Kurzfasern und ein thermoplastisches Matrixmaterial aufweisen, hergestellt oder bereitgestellt werden, und dass der oder die Flanschbereich-Rohlinge unter Wärmezufuhr zur Herstellung des Flanschbereichs an dem Grundkörper umgeformt und verpresst werden, wobei das Umformen und die Verpressung in einem Arbeitsgang erfolgt, und wobei der Flanschbereich einen Materialbereich aufweist, welcher eine Stirnseite des Grundkörpers abdeckt.

Durch das erfindungsgemäße Verfahren lässt sich in einem Arbeitsgang die Verbindung des Flanschbereichs mit dem Grundkörper erreichen und der Flanschbereich lässt sich mindestens in einem Teilbereich in seiner Endkontur oder endkonturnah durch Umformen und Verpressen herstellen. Dieser Vorgang lässt sich in einer konventionellen Heizpresse durchführen. Es ist dann keine Umspritzung zur Herstellung des Flanschbereichs notwendig; entsprechende Spritzgussmaschinen können sehr aufwendig sein, da die entsprechende Spritzgussform, der erforderliche Schließdruck und auch die Schussmenge an Spritzgussmaterial zur Herstellung eines Flanschbereichs "nicht konventionell" sind. Entsprechende Spritzgussmaschinen wären dann Sondermaschinen, die entsprechend teuer sind.

Günstig ist es, wenn die Wärmezufuhr derart ist, dass die Umformtemperatur des thermoplastischen Matrixmaterials mindestens bereichsweise erreicht wird. Dadurch lässt sich eine Umformbarkeit des Materials des Flanschbereich-Rohlings zur Ausbildung des Flanschbereichs erreichen. Ferner lässt sich eine Verschweißung des Flanschbereichs an dem Grundkörper erreichen. Es ist dabei grundsätzlich möglich, dass der Grundkörper außerhalb eines Bereichs, an welchem der Flanschbereich herzustellen ist, nicht über die Umformtemperatur erwärmt wird, um dort ein Aufschmelzen des thermoplastischen Materials zu verhindern. Es ist auch möglich, dass der gesamte Grundkörper-Rohling über die Umformtemperatur erwärmt wird, um eine Formung des Grundkörpers integral mit der Herstellung des Flanschbereichs zu ermöglichen.

Erfindungsgemäß erfolgt das Umformen und Verpressen in einer Heizpresse durchgeführt. Es lassen sich konventionelle Heizpressen zur Herstellung eines Faserverbundwerkstoff-Bauteils mit dem erfindungsgemäßen Verfahren verwenden.

Erfindungsgemäß erfolgt
das Umformen und die Verpressung in einem Arbeitsgang erfolgt. Erfindungsgemäß erfolgt
erfolgt die Umformung und die Verpressung des Flanschbereich-Rohlings zur Herstellung des Flanschbereichs in einem Arbeitsgang. Dadurch lässt sich das entsprechende Bauteil schnell und kosteneffektiv herstellen.

Es ist vorgesehen, dass der oder die Flanschbereich-Rohlinge in dem Grundkörper-Rohling vor dem Umformen und Verpressen positioniert werden. Beispielsweise wird ein Flanschkörper-Rohling oder werden mehrere Flanschkörper-Rohlinge auf den Grundkörper aufgelegt. Dadurch lässt sich auf einfache Weise eine Verbindung zwischen dem Flanschbereich und dem Grundkörper herstellen; insbesondere ist die Verbindung eine Schweißverbindung. Ganz besonders vorteilhaft ist es, wenn der oder die Flanschbereich-Rohlinge ein Volumen aufweisen, welches mindestens näherungsweise dem Volumen des hergestellten Flanschbereichs entspricht. Dadurch lässt sich der Flanschbereich in seiner Endkontur oder endkonturnah herstellen.

Erfindungsgemäß erfolgt
die Verpressung und Umformung mittels mindestens eines Druckstempels durchgeführt. Dadurch lässt sich das entsprechende Bauteil auf einfache Weise beispielsweise in einem Pressgesenk einer Heizpresse herstellen.

Es ist dabei vorteilhaft, wenn der mindestens eine Druckstempel so geformt ist, dass mittels des oder der Flanschbereich-Rohlinge der Flanschbereich in seiner Endkontur oder endkonturnah herstellbar ist. Dadurch lässt sich in einem Arbeitsgang eine Umformung und Verpressung erreichen und nachträgliche Bearbeitungsschritte zur Herstellung der Endkontur des Flanschbereichs sind nicht mehr notwendig oder sind bezüglich des notwendigen Aufwands minimierbar.

Es kann vorgesehen sein, dass der Druckstempel an oder in der Nähe eines Bereichs, welcher zur Formung des Flanschbereichs dient, beheizt wird. Dadurch lässt sich gezielt ein Flanschbereich-Rohling bzw. lassen sich mehrere Flanschbereich-Rohlinge zur Umformung und Verpressung erwärmen.

Der
Grundkörper-Rohling wird mittels mindestens eines Niederhalters in Position gehalten.

Dadurch lässt sich die Umformung und Verpressung von Flanschkörper-Rohlingen an dem Grundkörper auf einfache Weise durchführen. Ferner lässt sich über einen Niederhalter eine thermische Entkopplung erreichen, so dass beispielsweise als Grundkörper-Rohling bereits ein fertig hergestellter Grundkörper verwendet werden kann.

Der
mindestens eine Niederhalter ist an
einem Druckstempel fixiert. Dadurch lässt sich eine entsprechende Vorrichtung auf einfache Weise ausbilden.

Zwischen
dem mindestens einen Niederhalter und dem Druckstempel wird ein
Gasraum und insbesondere Luftraum gebildet Über diesen Luftraum lässt sich der Niederhalter thermisch von dem Druckstempel entkoppeln. Dadurch kann der Niederhalter weniger stark erwärmt sein als der Druckstempel. Dadurch wiederum kann derjenige Teil des Grundkörpers, auf welchen der Niederhalter wirkt, eine geringere Temperatur aufweisen als der Druckstempel, welcher auf den oder die Flanschbereich-Rohlinge wirkt. Es ist dadurch beispielsweise möglich, in einer Heizpresse einen Grundkörper-Rohling zu positionieren, welcher außerhalb eines Bereichs, an dem der Flanschbereich herzustellen ist, nicht über die Umformtemperatur und insbesondere Schmelztemperatur des thermoplastischen Matrixmaterials erwärmt wird. Dadurch ist es beispielsweise möglich, einen Flanschbereichteil einseitig an einem Grundkörper herzustellen und in einem weiteren Arbeitsgang in einem gesonderten Umformungs- und Pressvorgang einen zweiten Flanschbereich an dem Grundkörper herzustellen, wobei bei dem zweiten Vorgang der Grundkörper um 180° gedreht ist. Dieser zweite Vorgang kann so durchgeführt werden, dass das thermoplastische Material des Grundkörpers außerhalb des Bereichs, an dem der Flanschbereich hergestellt wird, nicht aufgeschmolzen wird.

Der mindestens eine Niederhalter wird elastisch an dem Druckstempel gehalten.

Dadurch ist es möglich, dass bei einem Pressvorgang der Druckstempel auf das entsprechende Werkstück zu gefahren wird und dabei der Niederhalter an dem Werkstück angelegt bleibt.

Erfindungsgemäß ist der mindestens eine Niederhalter über eine oder mehrere Federn an dem Druckstempel gehalten. Dadurch lässt sich auf elastische Weise der Abstand zwischen dem Niederhalter und dem Druckstempel variieren.

Es ist vorgesehen, dass der Abstand zwischen dem mindestens einen Niederhalter und dem mindestens einen Druckstempel beim Umform- und Pressvorgang im Vergleich zu einem Ausgangszustand verringert wird. Der Ausgangszustand ist derjenige Zustand, bei dem der mindestens eine Druckstempel keine Kraft auf das entsprechende Werkstück ausübt. Durch die Verringerung des Abstands zwischen Niederhalter und Druckstempel lässt sich bei Zubewegung des Druckstempels auf das Werkstück der Niederhalter in seiner Positionierungsfunktion für das Werkstück verwenden.

Günstig ist es, wenn als Grundkörper-Rohling eine oder mehrere Platten verwendet werden. Der Grundkörper lässt sich dabei auf einfache Weise herstellen. Es kann dabei grundsätzlich vorgesehen sein, dass der Grundkörper aus dem Grundkörper-Rohling bei dem Umform- und Pressvorgang zur Herstellung des Flanschbereichs auch entsprechend durch Verpressung hergestellt wird.

Der Grundkörper-Rohling ist zur Herstellung eines faserverstärkten Grundkörpers faserverstärkt. Die Faserverstärkung erfolgt dadurch, dass das mindestens eine Fasergebilde ein Faserstrang (Roving) und/oder Fasergewebe und/oder Fasergewirke und/oder Faservlies ist.

Insbesondere ist der Grundkörper-Rohling durch Endlosfasern und/oder Langfasern verstärkt. Dadurch können optimal Kräfte in das entsprechende Bauteil eingeleitet werden und abgeleitet werden. Beispielsweise lässt sich das entsprechend hergestellte Bauteil als Verstärkungsrippe verwenden.

Ganz besonders vorteilhaft ist es, wenn bei dem Umform- und Pressvorgang der Flanschbereich mit dem Grundkörper verschweißt wird. Dadurch lassen sich die Herstellungszeiten minimieren. Durch Aufschmelzen der thermoplastischen Matrix des Grundkörper-Rohlings und des oder der Flanschbereich-Rohlinge lässt sich an einem Grenzbereich zwischen diesen eine Schweißverbindung erreichen.

Es ist möglich, dass der Flanschbereich einseitig oder zweiseitig an dem Grundkörper hergestellt wird. Bei einer zweiseitigen Herstellung ist es möglich, dass der gesamte Flanschbereich in einem Arbeitsgang (in einem Umform- und Pressvorgang) hergestellt wird oder dass zwei unterschiedliche Arbeitsgänge erfolgen, wobei zwischen den Arbeitsgängen das Werkstück aus der entsprechenden Vorrichtung entnommen und um 180° gedreht wird. Die Vorrichtung, welche für den zweiten Arbeitsgang verwendet wird, muss dann entsprechend ausgebildet sein, so dass der zuvor hergestellte Flanschbereichteil ohne Zerstörung aufnehmbar ist.

Es kann vorgesehen sein, dass der oder die Flanschbereich-Rohling aus Halbzeugen zugeschnitten werden. Diese lassen sich dadurch auf einfache und kostengünstige Weise herstellen.

Der Erfindung liegt ferner die Aufgabe zugrunde, eine Vorrichtung der eingangs genannten Art bereitzustellen, mit der sich ein entsprechendes Faserverbundwerkstoff-Bauteil auf einfache Weise herstellen lässt.

Diese Aufgabe wird bei der eingangs genannten Vorrichtung erfindungsgemäß gelöst durch mindestens einen Niederhalter, weicher an dem mindestens einen Druckstempel fixiert ist, und über welchen ein Grundkörper-Rohling in Position haltbar ist, wobei der mindestens eine Niederhalter elastisch über eine oder mehrere Federn an dem mindestens einen Druckstempel fixiert ist, und wobei zwischen dem mindestens einen Niederhalter und dem mindestens einen Druckstempel ein Gasraum gebildet ist.

Die erfindungsgemäße Vorrichtung weist die bereits im Zusammenhang mit dem erfindungsgemäßen Verfahren erläuterten Vorteile auf.

Insbesondere ist das erfindungsgemäße Verfahren auf der erfindungsgemäßen Vorrichtung durchführbar.

Weitere vorteilhafte Ausgestaltungen der erfindungsgemäßen Vorrichtung wurden ebenfalls bereits im Zusammenhang mit dem erfindungsgemäßen Verfahren erläutert.

Es ist mindestens ein Niederhalter vorgesehen, weicher an dem mindestens einen Druckstempel fixiert ist und über welchen ein Grundkörper-Rohling in Position haltbar ist. Dadurch lässt sich beispielsweise sicherstellen, dass durch Umformen und Verpressen eines oder mehrerer Flanschbereich-Rohlinge der Grundkörper-Rohling nicht verschoben wird.

Der mindestens eine Niederhalter ist elastisch an dem mindestens einen Druckstempel fixiert. Dadurch kann der Niederhalter auf den Grundkörper-Rohling bei jeder Position des mindestens einen Druckstempels wirken.

Der mindestens eine Niederhalter ist über eine oder mehrere Federn an dem mindestens einen Druckstempel gehalten ist. Die Feder oder Federn lassen sich komprimieren, um bei jeder Stellung des Druckstempels die Niederhalterfunktion des Niederhalters zu gewährleisten.

Zwischen dem mindestens einen Niederhalter und dem mindestens einen Druckstempel ist ein Gasraum gebildet. Dieser Gasraum ist insbesondere ein Luftraum. Über ihn lassen sich der Niederhalter und der Druckstempel thermisch entkoppeln. Dadurch ist es beispielsweise erreichbar, dass der Grundkörper-Rohling außerhalb eines Bereichs, an dem der Flanschbereich gebildet werden soll, nicht über die Umformtemperatur aufgeheizt wird.

Günstig ist es, wenn der mindestens eine Druckstempel beheizbar ist. Dadurch lässt sich für den Werkstoff des Flanschbereich-Rohlings erreichen, dass die Umformtemperatur überschritten wird, um eine Umformung und Verpressung zu ermöglichen.

Ganz besonders vorteilhaft ist es, wenn eine oder mehrere Heizquellen an oder in der Nähe eines Bereichs des mindestens einen Druckstempels positioniert sind, welcher zur Herstellung des Flanschbereichs dient. Dadurch wird Wärme in dem Druckstempel unmittelbar dort erzeugt, wo sie in den oder die Flanschbereich-Rohlinge eingeleitet werden soll. Bei einer Heizquelle kann es sich um eine direkte Heizquelle handeln, welche in dem Druckstempel angeordnet ist, oder um eine indirekte Heizquelle beispielsweise über ein Heizmedium, welches durch den Druckstempel geführt ist.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausschnitts aus einem Ausführungsbeispiel einer Verbundstruktur mit einem ersten Bauteil und einem zweiten Bauteil mit einem Flanschbereich;
- Figur 2: eine schematische Schnittansicht eines Ausführungsbeispiels eines Bauteils mit einem Flanschbereich;
- Figur 3: schematisch einen Teilschritt bei der Herstellung der Verbindung zwischen dem ersten Bauteil und dem zweiten Bauteil;
- Figur 4: schematisch einen Querschnitt durch eine Vorrichtung zur Herstellung eines Bauteils mit einem Flanschbereich in einer Ausgangsstellung;
- Figur 5: die gleiche Darstellung wie Figur 4 in einer Endstellung.

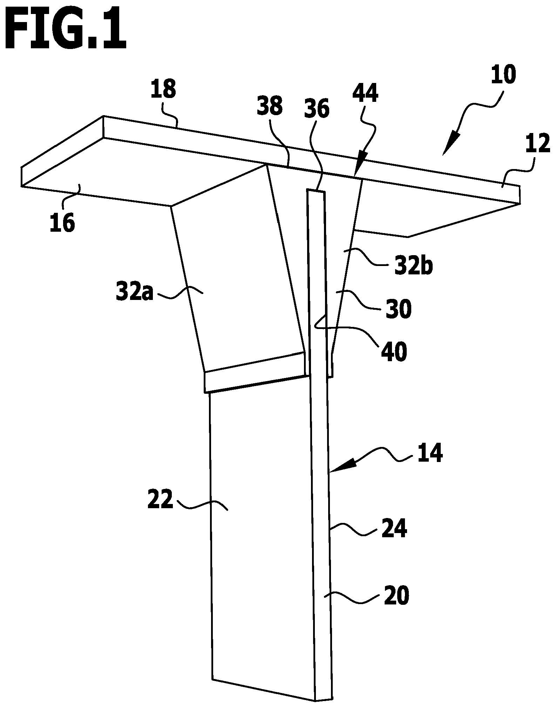

Ein Ausführungsbeispiel einer Verbundstruktur, welches in Figur 1 gezeigt und dort mit 10 bezeichnet ist, umfasst ein erstes Bauteil 12 und als weiteres Bauteil ein zweites Bauteil 14, wobei die beiden Bauteile 12 und 14 miteinander verbunden sind. Es kann noch ein drittes Bauteil, viertes Bauteil usw. vorgesehen sein, welche jeweils mit dem ersten Bauteil 12 verbunden sind. Es ist grundsätzlich auch möglich, dass ein oder mehrere weitere Bauteile mit dem zweiten Bauteil 14 verbunden sind. Das zweite Bauteil 14 dient beispielsweise als Verstärkungsrippe.

Das erste Bauteil 12 ist aus einem Faserverbundwerkstoff mit thermoplastischer Matrix hergestellt. Ein Beispiel für ein thermoplastisches Matrixmaterial ist PEEK.

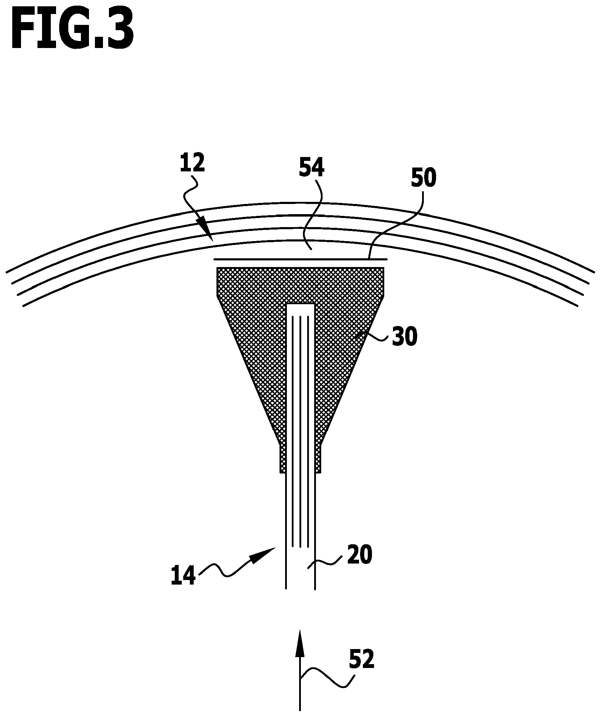

Das erste Bauteil 12 ist durch Endlosfasern und/oder Langfasern verstärkt (vgl. Figur 3). Als Endlosfasern werden Fasern bezeichnet, die in der Form von Rovings oder Geweben verarbeitet werden und deren Länge konstruktionsbedingt ist oder durch die geometrische Abmessung des Bauteils bedingt ist. Unter Kurzfasern werden hier Fasern mit einer Länge bis 50 mm und insbesondere kleiner 3 mm verstanden und unter Langfasern Fasern mit einer Länge größer 50 mm.

Die Endlosfasern im ersten Bauteil 12 sind mindestens näherungsweise parallel zu einer ersten Oberfläche 16 und einer gegenüberliegenden zweiten Oberfläche 18 des ersten Bauteils 12 orientiert. Fasern im Bauteil 12 sind mindestens näherungsweise parallel zueinander orientiert. Es können dabei beispielsweise Querorientierungen und insbesondere Senkrechtorientierungen von Fasern relativ zueinander vorgesehen sein.

Das erste Bauteil 12 kann gekrümmt ausgebildet sein und beispielsweise schalenförmig ausgebildet sein. Bei dem in Figur 3 gezeigten Beispiel ist das erste Bauteil 12 gekrümmt gezeigt.

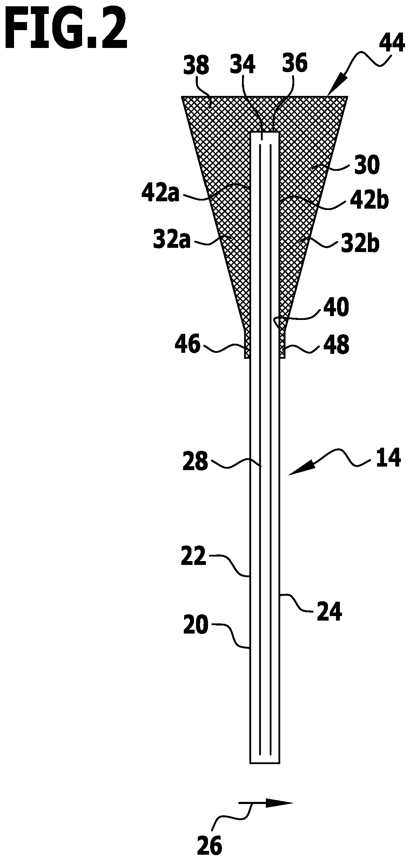

Das zweite Bauteil 14 (Figuren 1 und 2) ist ebenfalls aus einem Faserverbundwerkstoff mit thermoplastischer Matrix hergestellt. Es umfasst einen Grundkörper mit einem Tragebereich 20, welcher insbesondere plattenförmig ausgestaltet ist mit einer ersten Oberfläche 22 und einer parallel gegenüberliegenden zweiten Oberfläche 24. Zwischen diesen beiden Oberflächen 22 und 24 erstreckt sich der Tragebereich 20 mit einer Dickenrichtung 26.

Der Werkstoff des Tragebereichs 20 umfasst Endlosfasern 28 und/oder Langfasern, welche mindestens näherungsweise parallel zur ersten Oberfläche 22 und zur zweiten Oberfläche 24 orientiert sind. Fasern im Tragebereich 20 sind mindestens näherungsweise parallel zueinander ausgerichtet. Beispielsweise sind Fasern mit einer ersten Orientierung und Fasern mit einer zweiten Orientierung quer und insbesondere senkrecht zur ersten Orientierung vorgesehen.

Der Tragebereich 20 dient beispielsweise dazu, Verstärkungsrippen auszubilden.

An dem Tragebereich 20 ist ein Flanschbereich 30 angeordnet, welcher aus einem kurzfaserverstärkten Werkstoff hergestellt ist. Das Matrixmaterial des Flanschbereichs 30 ist dabei insbesondere das gleiche Matrixmaterial wie das des Tragebereichs 20 sowie das des ersten Bauteils 12.

Der Faseranteil der Kurzfasern im Flanschbereich 30 ist insbesondere (gewichtsbezogen) kleiner als 40 % und insbesondere kleiner als 30 %.

Der Flanschbereich 30 umgreift mit einem ersten Schenkel 32a und einem zweiten Schenkel 32b den Tragebereich 20 an einem Ende 34 dieses Tragebereichs 20, welches dem ersten Bauteil 12 zugewandt ist. Dadurch umgibt der Flanschbereich 30 eine Stirnseite 36 des Tragebereichs 20, welche dem ersten Bauteil 12 zugewandt ist.

Der Flanschbereich 30 weist einen Materialbereich 38 auf, welcher zwischen dem ersten Bauteil 12 und der Stirnseite 36 des Tragebereichs 20 liegt. Dieser Materialbereich 38 deckt die Stirnseite 36 zu dem ersten Bauteil 12 hin ab.

Der Flanschbereich 30 hat eine schlitzförmige Ausnehmung 40, in welcher der Tragebereich 20 sitzt. Die Ausnehmung 40 weist beispielsweise gegenüberliegende parallel beabstandete Wände 42a, 42b auf, zwischen welchen der Tragebereich 20 verbunden mit diesen Wänden 42a, 42b sitzt. Es kann auch eine Verjüngung zur Stirnseite 36 vorgesehen sein, um Spannungsspitzen zu verringern.

Beispielsweise ist der Flanschbereich 30 mit dem Tragebereich 20 verschweißt.

Der Flanschbereich 30 hat einen Verbindungsbereich 44 zur Verbindung mit dem ersten Bauteil 12, wobei der Verbindungsbereich eine Breite in der Dickenrichtung 26 bzw. längs einer Innenkontur des Bauteils 12 hat, welche größer als die entsprechende Breite des Tragebereichs 20 ist. (Dieser Verbindungsbereich 44 kann, abhängig von der Form des ersten Bauteils 12, eben oder einfach gekrümmt oder mehrfach gekrümmt oder eine Kombination davon sein.) Weiterhin ist die Gesamtfläche des Verbindungsbereichs 44 größer als die Gesamtfläche der Stirnfläche 36.

Bei dem gezeigten Ausführungsbeispiel hat der Flanschbereich 30 eine mindestens näherungsweise trapezförmige Außenkontur. Seine Breite in der Dickenrichtung 26 nimmt von dem ersten Bauteil 12 weg ab. Er ist zweiseitig an dem Tragebereich 20 hergestellt. Es ist grundsätzlich auch möglich, dass der Flanschbereich nur einseitig an dem Tragebereich 20 hergestellt ist. Er kann sich dabei oberhalb der Stirnseite 36 erstrecken oder diese nicht überdecken.

Der Flanschbereich 30 ist an einem Ende 46 stufenförmig ausgebildet, d. h. die Schenkel 32a, 32b laufen nicht in einem spitzen Winkel auf den Tragebereich 20 aus, sondern weisen einen Bereich 48 auf, welcher in einer Stufe ausläuft. Durch den Bereich 48 weist der Flanschbereich 30 einstückig verbundene Leisten auf, welche einander gegenüberliegen und zwischen welchen der Tragebereich 20 liegt.

Der Flanschbereich 30 kann an seinem Ende 46 auch spitz oder stumpf sein. Auch andere geometrische Ausgestaltungen sind möglich.

Das zweite Bauteil 14 ist mit dem ersten Bauteil 12 über den Flanschbereich 30 durch Schweißung verbunden. Beispielsweise erfolgt die Verbindung über Widerstandsschweißen.

Zwischen dem ersten Bauteil 12 und dem Flanschbereich 30 kann eine Wärmeverteilungseinrichtung wie beispielsweise ein Metallgitter 50 (Figur 3) angeordnet sein, um bei der Verbindung eine gleichmäßige Wärmeverteilung zu erhalten.

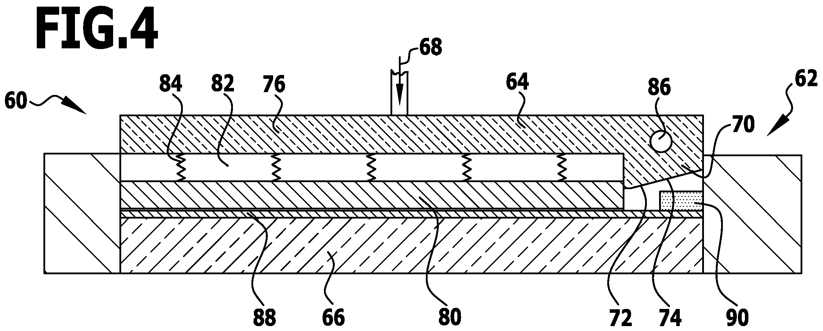

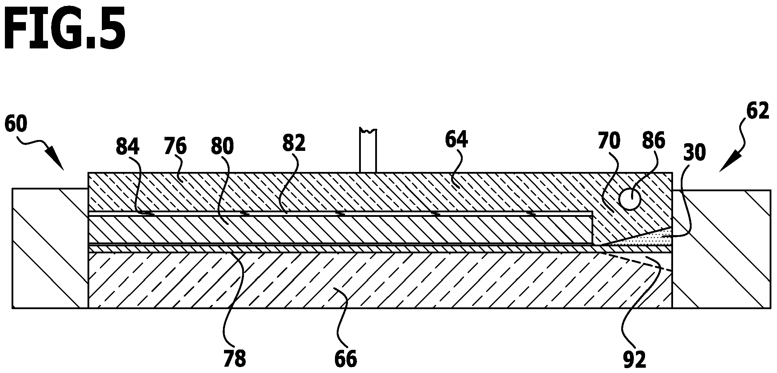

Das zweite Bauteil 14 wird mittels einer Vorrichtung 60, welche in den Figuren 4 und 5 gezeigt ist, hergestellt. Diese Vorrichtung zur Herstellung eines Faserverbundwerkstoff-Bauteils umfasst eine Heizpresse 62 mit (mindestens) einem Druckstempel 64 und einem Gegenelement (Ambosselement) 66 zu dem Druckstempel 64.

Es ist dabei grundsätzlich möglich, dass das Gegenelement 66 selber als Druckstempel ausgebildet ist.

Zwischen dem Druckstempel 64 und dem Gegenelement 66 ist ein Werkstück zur Bearbeitung positionierbar; das Werkstück ist dabei auf das Gegenelement 66 auflegbar und über den Druckstempel 64, welcher in einer Richtung 68 auf das Gegenelement 66 zu fahrbar ist, ist ein entsprechender Druck auf das Werkstück ausübbar.

Der Druckstempel 64 weist eine Kontur auf, welche so ausgebildet ist, dass das zweite Bauteil 14 herstellbar ist. Dazu weist der Druckstempel 64 einen Bereich 70 auf, welcher in seiner Kontur 72, welche dem Werkstück zugewandt ist, so ausgebildet ist, dass der Flanschbereich 30 in seiner Endkontur oder zumindest endkonturnah hergestellt wird.

Beispielsweise ist die Kontur 72 derart ausgestaltet, dass der trapezförmige Flanschbereich 30 herstellbar ist. Dazu weist die Kontur 72 eine Begrenzungsfläche 74 auf (die eben sein kann oder nicht eben), welche zu der Richtung 68 in einem entsprechenden Winkel geneigt ist.

Der Druckstempel 64 weist ferner einen Bereich 76 auf, welcher an einen Grundkörper 78 angepasst ist, welcher den Tragebereich 20 des zweiten Bauteils 14 umfasst.
An dem Bereich 76 ist ein Niederhalter 80 gehalten. Dieser dient dazu, wie später noch erläutert wird, einen Grundkörper-Rohling in der Heizpresse 62 in Position zu halten.

Zwischen dem Niederhalter 80 und dem Druckstempel 64 ist ein Gasraum 82 und insbesondere Luftraum gebildet. Der Druckstempel 64 und der Niederhalter 80 sind beabstandet zueinander, wobei der Abstand der Höhe des Grasraums 82 entspricht. Dieser Abstand ist variabel. Bei einem Umform- und Pressvorgang in der Heizpresse 82 (Figur 5) ist die Höhe des Gasraums 82 verkleinert verglichen zu einem Ausgangszustand, bei dem keine Umformungskräfte ausgeübt werden (Figur 4).

Der Niederhalter 80 ist elastisch an dem Druckstempel 64 fixiert. Dazu sind Federn 84 vorgesehen, welche in dem Gasraum 82 positioniert sind. Diese Federn 84, welche insbesondere in einer Richtung senkrecht zur Richtung 68 gleichmäßig verteilt angeordnet sind, sind jeweils in einer Richtung parallel zur Richtung 68 komprimierbar (Figur 5).

Durch den Gasraum 62 lässt sich der Niederhalter 80 thermisch von dem Druckstempel 64 entkoppeln.

Der Druckstempel 64 ist beheizt. Es sind dabei insbesondere eine oder mehrere Heizquellen 86 in dem Bereich 70 des Druckstempels 64 angeordnet, welcher zur Formung des Flanschbereichs 30 dient. Eine Heizquelle 86 kann eine indirekte Heizquelle sein, wobei dann ein entsprechender Heizer in dem Druckstempel 64 angeordnet ist. Es kann sich auch um eine indirekte Heizquelle handeln, indem beispielsweise ein Heizfluid durch den Druckstempel 64 geführt wird.

Das erfindungsgemäße Verfahren zur Herstellung des zweiten Bauteils 14 funktioniert wie folgt:
Es wird ein Grundkörper-Rohling 88 hergestellt oder bereitgestellt. Der Grundkörper-Rohling 88 dient zur Herstellung eines Grundkörpers, an welchem der Tragebereich 20 gebildet ist bzw. der Tragebereich 20 ist der Grundkörper. Der Grundkörper-Rohling 88 weist ein thermoplastisches Matrixmaterial und ein oder mehrere Fasergebilde zur Faserverstärkung auf. Bei den Fasergebilden kann es sich um Faserstränge (Rovings) und/oder Fasergewebe und/oder Fasergewirke und/oder Faservliese handeln. Insbesondere umfasst der Grundkörper-Rohling 88 Endlosfasern und/oder Langfasern.

Beispielsweise ist der Grundkörper-Rohling 88 durch eine oder mehrere faserverstärkte (mit Endlosfasern und/oder Langfasern) Platten gebildet.

Der Grundkörper-Rohling 88 wird auf dem Gegenelement 66 positioniert.

Weiterhin werden ein oder mehrere Flanschbereich-Rohlinge 90 hergestellt. Ein Flanschbereich-Rohling 90 umfasst Kurzfasern in einem thermoplastischen Matrixmaterial. Ein Flanschbereich-Rohling 90 wird beispielsweise aus ebenen Halbzeugen zugeschnitten.

Das Volumen eines Flanschbereich-Rohlings 90 bzw. der Summe von Flanschbereich-Rohlingen 90 ist so gewählt, dass es mindestens näherungsweise dem Endvolumen des herzustellenden Flanschbereichs 90 entspricht.

Der oder die Flanschbereich-Rohlinge 90 werden an dem Grundkörper-Rohling 88 in einem Bereich positioniert, an dem der Flanschbereich 30 herzustellen ist.

In den Figuren 4 und 5 ist ein Ausführungsbeispiel gezeigt, bei dem ein Flanschbereich 30 nur einseitig an dem Grundkörper 78 hergestellt wird. Bei diesem Ausführungsbeispiel werden der oder die Flanschbereich-Rohlinge 90 auf dem Grundkörper-Rohling 88 positioniert.

Es ist auch möglich, dass der Flanschbereich 30 trapezförmig ausgebildet ist und beidseitig am Grundkörper sitzt, wie in Figur 3 gezeigt. Ein solcher Flanschbereich kann in einem Arbeitsschritt hergestellt werden, wenn beispielsweise zwei gegenläufige Druckstempel 64 mit entsprechender Kontur vorgesehen sind. Es ist beispielsweise grundsätzlich auch möglich, dass zuerst ein Flanschbereich einseitig hergestellt wird und dann in einem nächsten Umform- und Pressvorgang der weitere Flanschbereich hergestellt wird. Dazu muss das Gegenelement 66 eine entsprechende Ausnehmung aufweisen, welche in Figur 5 schematisch durch das Bezugszeichen 92 angedeutet ist.

Nach Positionierung des Grundkörper-Rohlings 88 an dem Gegenelement 66 und des oder der Flanschbereich-Rohlinge 90 wird der Druckstempel 64 aufgesetzt. Der Bereich 70 des Druckstempels 64 wird dabei über den oder die Flanschbereich-Rohlinge 90 gebracht.

Der Niederhalter 80 wird über die Federn 84 auf den Grundkörper-Rohling 88 gedrückt und hält diesen in Position.

Der Druckstempel 64 wird beheizt. Es erfolgt insbesondere eine Beheizung über die Heizquelle oder Heizquellen 86 in dem Bereich 70. Es wird dabei auf eine solche Temperatur geheizt, dass die Umformtemperatur für das thermoplastische Matrixmaterial erreicht wird bzw. überschritten wird.

Es kann auch eine Heizung des Gegenelements 66 insbesondere von unten her vorgesehen sein.

Über den Gasraum 82 zwischen dem Niederhalter 80 und dem Druckstempel 64 lässt sich der Niederhalter 80 thermisch von dem Druckstempel 64 entkoppeln. Dadurch ist die Temperatur, die auf den Grundkörper-Rohling 88 wirkt, niedriger, als diejenige, welche auf den oder die Flanschbereich-Rohlinge 90 wirkt.

Der Druckstempel 64 wird auf das Gegenelement zu gedrückt. Dabei wird die Höhe des Gasraums 82 verkleinert, wobei die Federn 84 zusammengedrückt werden.

Der Druckstempel 64 wirkt mit seiner Kontur 72 auf den oder die Flanschbereich-Rohlinge 90. Durch die Heizung über die Umformtemperatur lässt sich das Material des oder der Flanschbereich-Rohlinge 90 umformen und dabei verpressen und in die Endkontur bringen. Das thermoplastische Material schmilzt auf. Auch das thermoplastische Material im Grundkörper-Rohling 88 schmilzt bei entsprechender Beheizung auf. Dadurch lässt sich der Flanschbereich mit dem Grundkörper 78 verschweißen.

Es ist dabei grundsätzlich möglich, dass der Grundkörper-Rohling 88 außerhalb des Bereichs, an dem der Flanschbereich 30 hergestellt wird, dem hergestellten Grundkörper 78 entspricht. Es ist aber auch möglich, dass der Grundkörper-Rohling 88 selber noch verpresst wird. Beispielsweise kann auch eine Konsolidierung des thermoplastischen Matrixmaterials des Grundkörper-Rohlings 88 erfolgen.

Die Umformung und Verpressung des Flanschbereich-Rohlings 90 zur Herstellung des Flanschbereichs 30 an dem Grundkörper 78 (oder gegebenenfalls eines Flanschbereichteils) erfolgt in einem Arbeitsgang in der Heizpresse 62. Ein entsprechender Flanschbereich 30 lässt sich beispielsweise mittels eines Druckstempels 64 eines Pressgesenks herstellen. Es lässt sich eine konventionelle Heizpresse 62 zur Herstellung eines kurzfaserverstärkten Flanschbereichs mit thermoplastischem Matrixmaterial an einem Grundkörper 78 mit Tragebereich 24 herstellen, wobei der Grundkörper 78 faserverstärkt mit thermoplastischem Matrixmaterial ist.

Durch die erfindungsgemäße Vorrichtung 60 und das erfindungsgemäße Verfahren können entsprechende Faserverbundwerkstoff-Bauteile 14 auch mit komplexen Geometrien insbesondere des Flanschbereichs 30 hergestellt werden, ohne dass Spritzgussmaschinen verwendet werden müssen. Entsprechende Spritzgussmaschinen wären sehr aufwendig aufgrund der erforderlichen Größe und des Schließdrucks. Durch die erfindungsgemäße Lösung lässt sich eine konventionelle Heizpresse 62 verwenden.

## Patentansprüche

1. Verfahren zur Herstellung eines Faserverbundwerkstoff-Bauteils, welches einen faserverstärkten Grundkörper und einen an dem Grundkörper angeordneten kurzfaserverstärkten Flanschbereich aufweist, umfassend:
- Herstellung oder Bereitstellung eines Grundkörper-Rohlings, welcher ein oder mehrere Fasergebilde und thermoplastisches Matrixmaterial aufweist;
- Herstellung oder Bereitstellung eines oder mehrerer Flanschbereich-Rohlinge, welche Kurzfasern und ein thermoplastisches Matrixmaterial aufweisen; und
- Umformen und Verpressen des oder der Flanschbereich-Rohlinge unter Wärmezufuhr zur Herstellung des Flanschbereichs an dem Grundkörper, wobei das Umformen und die Verpressung in einem Arbeitsgang erfolgt;
- wobei der Flanschbereich einen Materialbereich aufweist, welcher eine Stirnseite des Grundkörpers abdeckt.

2. Verfahren nach Anspruch 1, **dadurch gekennzeichnet, dass** die Wärmezufuhr derart ist, dass die Umformtemperatur des thermoplastischen Matrixmaterials mindestens bereichsweise erreicht wird.

3. Verfahren nach Anspruch 1 oder 2, **dadurch gekennzeichnet, dass** das Umformen und Verpressen in einer Heizpresse durchgeführt wird.

4. Verfahren nach einem der vorangehenden Ansprüche, **dadurch gekennzeichnet, dass** der oder die Flanschbereich-Rohlinge an dem Grundkörper-Rohling vor dem Umformen und Verpressen positioniert werden.

5. Verfahren nach einem der vorangehenden Ansprüche, **dadurch gekennzeichnet, dass** der oder die Flanschbereich-Rohlinge ein Volumen aufweisen, welches mindestens näherungsweise dem Volumen des hergestellten Flanschbereichs entspricht.

6. Verfahren nach einem der vorangehenden Ansprüche, **dadurch gekennzeichnet, dass** die Verpressung und Umformung mittels mindestens eines Druckstempels durchgeführt wird.

7. Verfahren nach Anspruch 6, **dadurch gekennzeichnet, dass** der mindestens eine Druckstempel so geformt ist, dass mittels des oder der Flanschbereich-Rohlinge der Flanschbereich in seiner Endkontur oder endkonturnah herstellbar ist.

8. Verfahren nach Anspruch 6 oder 7, **dadurch gekennzeichnet, dass** der Druckstempel an oder in der Nähe eines Bereichs, welcher zur Formung des Flanschbereichs dient, beheizt wird.

9. Verfahren nach einem der vorangehenden Ansprüche, **dadurch gekennzeichnet, dass** der Grundkörper-Rohling mittels mindestens eines Niederhalters in Position gehalten wird.

10. Verfahren nach Anspruch 9, **dadurch gekennzeichnet, dass** der mindestens eine Niederhalter an einem Druckstempel fixiert ist.

11. Verfahren nach Anspruch 10, **dadurch gekennzeichnet, dass** zwischen dem mindestens einen Niederhalter und dem Druckstempel ein Gasraum gebildet wird.

12. Verfahren nach Anspruch 10 oder 11, **dadurch gekennzeichnet, dass** der mindestens eine Niederhalter elastisch an dem Druckstempel gehalten wird.

13. Verfahren nach Anspruch 12, **dadurch gekennzeichnet, dass** der mindestens eine Niederhalter über eine oder mehrere Federn an dem Druckstempel gehalten wird.

14. Verfahren nach einem der Ansprüche 11 bis 13, **dadurch gekennzeichnet, dass** der Abstand zwischen dem mindestens einen Niederhalter und dem mindestens einen Druckstempel beim Umform- und Pressvorgang im Vergleich zu einem Ausgangszustand verringert wird.

15. Verfahren nach einem der vorangehenden Ansprüche, **dadurch gekennzeichnet, dass** als Grundkörper-Rohling eine oder mehrere Platten verwendet werden.

16. Verfahren nach einem der vorangehenden Ansprüche, **dadurch gekennzeichnet, dass** das mindestens eine Fasergebilde ein Faserstrang und/oder Fasergewebe und/oder Fasergewirke und/oder Faservlies ist.

17. Verfahren nach einem der vorangehenden Ansprüche, **dadurch gekennzeichnet, dass** der Grundkörper-Rohling durch Endlosfasern und/oder Langfasern verstärkt ist.

18. Verfahren nach einem der vorangehenden Ansprüche, **dadurch gekennzeichnet, dass** bei dem Umform- und Pressvorgang der Flanschbereich mit dem Grundkörper verschweißt wird.

19. Verfahren nach einem der vorangehenden Ansprüche, **dadurch gekennzeichnet, dass** der Flanschbereich einseitig oder zweiseitig an dem Grundkörper hergestellt wird.

20. Verfahren nach einem der vorangehenden Ansprüche, **dadurch gekennzeichnet, dass** der oder die Flanschbereich-Rohlinge aus Halbzeugen zugeschnitten werden.

21. Vorrichtung zur Herstellung eines Faserverbundwerkstoff-Bauteils (14) gemäß einem der vorangehenden Ansprüche, welches einen faserverstärkten Grundkörper (78) mit thermoplastischem Matrixmaterial und einen an dem Grundkörper (78) angeordneten kurzfaserverstärkten Flanschbereich (30) mit thermoplastischem Matrixmaterial aufweist, umfassend eine Heizpresse (62) mit mindestens einem Druckstempel (64), wobei der mindestens eine Druckstempel (64) so ausgebildet ist, dass unter Umformung und Verpressung eines oder mehrerer Flanschkörper-Rohlinge (90) der Flanschbereich (30) in seiner Endkontur oder endkonturnah herstellbar ist, **gekennzeichnet durch** mindestens einen Niederhalter (80), welcher an dem mindestens einen Druckstempel (64) fixiert ist, und über welchen ein Grundkörper-Rohling (88) in Position haltbar ist, wobei der mindestens eine Niederhalter (80) elastisch über eine oder mehrere Federn (84) an dem mindestens einen Druckstempel (64) fixiert ist, und dass zwischen dem mindestens einen Niederhalter (80) und dem mindestens einen Druckstempel (64) ein Gasraum (82) gebildet ist.

22. Vorrichtung nach Anspruch 21, **dadurch gekennzeichnet, dass** der mindestens eine Druckstempel (64) beheizbar ist.

23. Vorrichtung nach Anspruch 22, **dadurch gekennzeichnet, dass** eine oder mehrere Heizquellen (86) an oder in der Nähe eines Bereichs (70) des mindestens einen Druckstempels (64) positioniert sind, welcher zur Herstellung des Flanschbereichs (30) dient.

## Claims

1. Method for producing a fiber composite material component which has a fiber-reinforced base body and a short-fiber-reinforced flange region arranged on the base body, comprising:
- producing or providing a base body blank which has one or more fiber structures and thermoplastic matrix material;
- producing or providing one or more flange region blanks which have short fibers and a thermoplastic matrix material; and
- forming and compressing the flange region blank or blanks while supplying heat for producing the flange region on the base body, wherein the forming and the compressing occurs in one working operation;
- wherein the flange region has a material region which covers a face side of the base body.

2. Method in accordance with Claim 1, **characterized in that** the supply of heat is such that the forming temperature of the thermoplastic matrix material is reached at least in regions.

3. Method in accordance with Claim 1 or 2, **characterized in that** the forming and compressing is carried out in a hot press.

4. Method in accordance with any one of the preceding Claims, **characterized in that** the flange region blank or blanks are positioned on the base body blank before the forming and compressing.

5. Method in accordance with any one of the preceding Claims, **characterized in that** the flange region blank or blanks have a volume which corresponds at least approximately to the volume of the produced flange region.

6. Method in accordance with any one of the preceding Claims, **characterized in that** the compression and formation is carried out by means of at least one pressure stamp.

7. Method in accordance with Claim 6, **characterized in that** the at least one pressure stamp is shaped such that the flange region is producible in the end contour thereof or near the end contour thereof by means of the flange region blank or blanks.

8. Method in accordance with Claim 6 or 7, **characterized in that** the pressure stamp is heated at or near a region which serves for the formation of the flange region.

9. Method in accordance with any one of the preceding Claims, **characterized in that** the base body blank is held in position by means of at least one pressure pad.

10. Method in accordance with Claim 9, **characterized in that** the at least one pressure pad is fixed on a pressure stamp.

11. Method in accordance with Claim 10, **characterized in that** a gas space is formed between the at least one pressure pad and the pressure stamp.

12. Method in accordance with Claim 10 or 11, **characterized in that** the at least one pressure pad is held elastically on the pressure stamp.

13. Method in accordance with Claim 12, **characterized in that** the at least one pressure pad is held on the pressure stamp by way of one or more springs.

14. Method in accordance with any one of Claims 11 to 13, **characterized in that** the distance between the at least one pressure pad and the at least one pressure stamp is reduced during the forming and compressing operation in comparison to an initial state.

15. Method in accordance with any one of the preceding Claims, **characterized in that** one or more plates are used as the base body blank.

16. Method in accordance with any one of the preceding Claims, **characterized in that** the at least one fiber structure is a fiber strand and/or fibrous woven fabric and/or fibrous knitted fabric and/or fibrous non-woven fabric.

17. Method in accordance with any one of the preceding Claims, **characterized in that** the base body blank is reinforced by continuous fibers and/or long fibers.

18. Method in accordance with any one of the preceding Claims, **characterized in that** the flange region is welded to the base body during the forming and compressing operation.

19. Method in accordance with any one of the preceding Claims, **characterized in that** the flange region is produced on one side or on two sides on the base body.

20. Method in accordance with any one of the preceding Claims, **characterized in that** the flange region blank or blanks are cut from semifinished products.

21. Apparatus for producing a fiber composite material component (14) in accordance with any one of the preceding Claims, which has a fiber-reinforced base body (78) with thermoplastic matrix material and a short-fiber-reinforced flange region (30) with thermoplastic matrix material which is arranged on the base body (78), comprising a hot press (62) with at least one pressure stamp (64), wherein the at least one pressure stamp (64) is configured such that the flange region (30) is producible in the end contour thereof or near the end contour thereof while forming and compressing one or more flange body blanks (90), **characterized by** at least one pressure pad (80) which is fixed on the at least one pressure stamp (64) and by way of which a base body blank (88) is holdable in position, wherein the at least one pressure pad (80) is fixed elastically on the at least one pressure stamp (64) by way of one or more springs (84), and in that a gas space (82) is formed between the at least one pressure pad (80) and the at least one pressure stamp (64).

22. Apparatus in accordance with Claim 21, **characterized in that** the at least one pressure stamp (64) is heatable.

23. Apparatus in accordance with Claim 22, **characterized in that** one or more heat sources (86) are positioned at or near a region (70) of the at least one pressure stamp (64), which region (70) serves for the production of the flange region (30).

## Revendications

1. Procédé de fabrication d'un élément en matériau composite renforcé par des fibres, lequel présente un corps de base renforcé par des fibres et une zone de bride renforcée par des fibres courtes et située sur le corps de base, comportant :
- la fabrication ou la fourniture d'une ébauche de corps de base, laquelle présente une ou plusieurs structures fibreuses et un matériau matriciel thermoplastique ;
- la fabrication ou la fourniture d'une ou de plusieurs ébauches de zone de bride, lesquelles présentent des fibres courtes et un matériau matriciel thermoplastique ; et
- le formage et la compression de l'ébauche ou des ébauches de zone de bride avec apport de chaleur pour la fabrication de la zone de bride sur le corps de base, dans lequel le formage et la compression s'effectuent au cours d'une étape de travail ;
- dans lequel la zone de bride présente une zone de matériau, laquelle recouvre une face frontale du corps de base.

2. Procédé selon la revendication 1, **caractérisé en ce que** l'apport de chaleur est tel que la température de formage du matériau matriciel thermoplastique est atteinte au moins par endroits.

3. Procédé selon la revendication 1 ou 2, **caractérisé en ce que** le formage et la compression sont effectués dans une presse chauffante.

4. Procédé selon l'une quelconque des revendications précédentes, **caractérisé en ce que** l'ébauche ou les ébauches de zone de bride sont positionnées sur l'ébauche de corps de base avant le formage et la compression.

5. Procédé selon l'une quelconque des revendications précédentes, **caractérisé en ce que** l'ébauche ou les ébauches de zone de bride présentent un volume correspondant au moins approximativement au volume de la zone de bride fabriquée.

6. Procédé selon l'une quelconque des revendications précédentes, **caractérisé en ce que** la compression et le formage sont réalisés au moyen d'au moins un poinçon.

7. Procédé selon la revendication 6, **caractérisé en ce que** le au moins un poinçon est formé de sorte que le contour final ou le contour presque final de la zone de bride peut être fabriqué au moyen de l'ébauche ou des ébauches de zone de bride.

8. Procédé selon la revendication 6 ou 7, **caractérisé en ce que** le poinçon est chauffé sur une zone qui sert au façonnage de la zone de bride, ou à proximité de ladite zone.

9. Procédé selon l'une quelconque des revendications précédentes, **caractérisé en ce que** l'ébauche de corps de base est maintenue en position au moyen d'au moins un serre-flan.

10. Procédé selon la revendication 9, **caractérisé en ce que** le au moins un serre-flan est fixé à un poinçon.

11. Procédé selon la revendication 10, **caractérisé en ce qu'**une chambre de gaz est formée entre le au moins un serre-flan et le poinçon.

12. Procédé selon la revendication 10 ou 11, **caractérisé en ce que** le au moins un serre-flan est retenu élastiquement sur le poinçon.

13. Procédé selon la revendication 12, **caractérisé en ce que** le au moins un serre-flan est maintenu sur le poinçon par l'intermédiaire d'un ou de plusieurs ressorts.

14. Procédé selon l'une quelconque des revendications 11 à 13, **caractérisé en ce que** la distance entre le au moins un serre-flan et le au moins un poinçon est réduite au cours du processus de formage et de compression en comparaison d'un état de départ.

15. Procédé selon l'une quelconque des revendications précédentes, **caractérisé en ce qu'**une ou plusieurs plaques sont utilisées comme ébauche de corps de base.

16. Procédé selon l'une quelconque des revendications précédentes, **caractérisé en ce que** la au moins une structure fibreuse est un faisceau de fibres et/ou un tissu fibreux et/ou un tricot fibreux et/ou un non-tissé fibreux.

17. Procédé selon l'une quelconque des revendications précédentes, **caractérisé en ce que** l'ébauche de corps de base est renforcée par des fibres continues et/ou des fibres longues.

18. Procédé selon l'une quelconque des revendications précédentes, **caractérisé en ce que** la zone de bride est soudée au corps de soudage lors du processus de formage et de compression.

19. Procédé selon l'une quelconque des revendications précédentes, **caractérisé en ce que** la zone de bride est fabriquée d'une seule pièce sur le corps de base unilatéralement ou bilatéralement.

20. Procédé selon l'une quelconque des revendications précédentes, **caractérisé en ce que** l'ébauche ou les ébauches de zone de bride sont découpées à partir de produits semi-finis.

21. Dispositif de fabrication d'un élément en matériau composite renforcé par des fibres selon l'une quelconque des revendications précédentes, lequel présente un corps de base (78) renforcé par des fibres pourvu d'un matériau matriciel thermoplastique et une zone de bride (30) renforcée par des fibres courtes située sur le corps de base (78) et pourvue d'un matériau matriciel thermoplastique, comprenant une presse chauffante (62) pourvue d'au moins un poinçon (64), dans lequel le au moins un poinçon (64) est conçu de sorte que le contour final ou le contour presque final de la zone de bride (30) peut être fabriqué sous l'effet d'un formage et d'une compression d'une ou de plusieurs ébauches de corps de bride (90), **caractérisé par** au moins un serre-flan (80), lequel est fixé au au moins un poinçon (64), et par l'intermédiaire duquel une ébauche de corps de base (88) peut être maintenue en position, dans lequel le au moins un serre-flan (80) est fixé de manière élastique sur le au moins un poinçon (64) par l'intermédiaire d'un ou de plusieurs ressorts (84), et en ce qu'une chambre de gaz (82) est formée entre le au moins un serre-flan (80) et le au moins un poinçon (64).

22. Dispositif selon la revendication 21, **caractérisé en ce que** le au moins un poinçon (64) peut être chauffé.

23. Dispositif selon la revendication 22, **caractérisé en ce qu'**une ou plusieurs sources de chaleur (86) sont positionnées sur une zone (70) du au moins un poinçon (64) ou à proximité de celle-ci, laquelle zone sert à fabriquer la zone de bride (30).
